# NEW EUROPEAN PATENT SPECIFICATION

(11) **EP 1 755 864 B2**
(45) Date of publication and mention of the opposition decision: **13.08.2014**
(45) Mention of the grant of the patent: 23.11.2011
(21) Application number: 05756031.0
(22) Date of filing: 08.06.2005
(51) Int. Cl.: B29C 55/00, B29K 67/00

(54) **PROCESS FOR THE PRODUCTION OF BIODEGRADABLE FILMS HAVING IMPROVED MECHANICAL PROPERTIES**
VERFAHREN ZUM HERSTELLEN VON BIODEGRADIERBAREN FOLIEN MIT VERBESSERTEN MECHANISCHEN EIGENSCHAFTEN
PROCEDE DE PRODUCTION DE FILMS BIODEGRADABLES AYANT DES PROPRIETES MECANIQUES AMELIOREES

(30) Priority: 09.06.2004 IT MI20040115
(43) Date of publication of application: 28.02.2007
(73) Proprietor: NOVAMONT S.p.A., 28100 Novara (IT)
(72) Inventor: BASTIOLI, Catia, I-28100 Novara (IT); DEL TREDICI, Gianfranco, I-21018 Sesto Calende (IT); GUANELLA, Italo, I-28068 Romentino (IT)
(74) Representative: Zanoli, Enrico
(86) International application number: PCT/EP2005/006146
(87) International publication number: WO 2005/120808

(56) References cited:
- EP-A- 0 531 021
- EP-A- 0 688 806
- EP-A- 0 736 563
- EP-A1- 0 531 021
- EP-A2- 0 537 657
- WO-A-01/30893
- WO-A-97/22459
- WO-A-99/23146
- WO-A-03/070450
- WO-A1-97/22459
- WO-A1-99/23146
- DE-A1- 10 054 650
- DE-A1- 19 847 909
- US-A- 4 277 578
- US-A- 5 391 423
- US-A1- 2003 028 176
- PATENT ABSTRACTS OF JAPAN vol. 1995, no. 11, 26 December 1995 (1995-12-26) & JP 07 205278 A (MITSUBISHI PLASTICS IND LTD; others: 01), 8 August 1995 (1995-08-08)
- PATENT ABSTRACTS OF JAPAN vol. 0102, no. 38 (M-508), 16 August 1986 (1986-08-16) & JP 61 069431 A (TEIJIN LTD), 10 April 1986 (1986-04-10)

## Description

The present invention relates to a monoaxial or biaxial cold stretching process of a blown film to produce biodegradable films characterized by improved mechanical properties.

The use of biodegradable films to produce products such as bags for separate waste collection, shopping bags, mulch film, diapers, sanitary articles and the like, has grown rapidly in recent years. In particular, products deriving from the processing of biodegradable films obtained from starch and polyester based compositions are currently widely used on the market. The reason for this increased spread of starch based mixtures within the scope of biodegradable plastic materials is linked in particular to the need to use raw materials deriving from renewable sources.

It is important to attempt to reduce the costs of these films in order to allow faster and more widespread penetration of biodegradable materials in the market, also in view of an increased social awareness of problems related to sustainable and eco-compatible development.

An object of the present invention is to provide a process for the production of biodegradable films which makes it possible to obtain products with the appropriate properties related to performance, while at the same time limiting the production costs of said films. The present invention therefore relates to a monoaxial or biaxial cold stretching process for the production of biodegradable films which makes it possible to produce biodegradable films characterized by reduced thickness and superior mechanical properties.

The processes to stretch plastic films (that is, sheets with a thickness which is generally below 200 µm), are known: these are processes to orient films in a longitudinal and/or transverse direction (oriented and bi-oriented films) which allow uniform distribution of the polymer molecules, influencing the mechanical properties of the film in the various directions to increase the stiffness thereof. The prior art also describes stretching processes applied to biodegradable films, in particular deriving from starch based compositions.

EP-0 537 657 describes a stretching process of mono-layer or multi-layer films with at least one layer composed of thermoplastically processable starch, wherein the film is monoaxially or biaxially stretched with a stretch ratio between 1:4 and 1:10, preferably 1:6 and 1:8.5 and even more preferably with a ratio of 1:7 and 1:7.5. The stretching process is performed on an essentially anhydrous film as the initial polymers are dried prior to melting or dehydrated during extrusion. Stretching is performed (see Table 1 of EP-0 537 657) within a temperature range of approximately 90 - 130°C. At stretch ratios below 1:4 the properties of the film decline significantly.This process generically provides for the possibility of stretching at ambient temperature, although always and only with an anhydrous starch based mixture and with stretch ratios of at least 1:4. The process described there is therefore costly from the viewpoint of energy consumption. Moreover, the stretched films obtained according to said process, although showing an increase in the ultimate tensile strength values, show a considerable increase in the elastic modulus values, making these films particularly stiff, although fragile and with a low tearing strength.

WO 97/22459 discloses a process for producing oriented polyhydroxyalkanoate (PHA) comprising a first stretch at a temperature below 60°C and a second stretch at a temperature of 60-110°C. The first stretch is carried out before the polymer has fully solidified; the extent of the first stretch is incomplete to permit further stretching.

WO 01/30893 discloses a process for producing polymer products by stretching compositions comprising a biodegradable polyhydroxyalkanoate at a temperature of from (Tg + 20°C) to (Tm - 20°C). Since Tm of the relevant polymer is generally above 100°C, it follows that the stretching process can be carried out also at a temperature above 80°C.

It can be appreciated that the stretch processes described in these two patent documents are carried out at a relatively high temperature, as known in the art. This involves a significant energy consumption.

The drawbacks mentioned above are now surprisingly overcome by the process of claim 1 of the present invention, wherein a biodegradable film, after its production by bubble blowing, is subjected to a cold stretching process with a stretch ratio greater than 1:1 and less than 1:4, in particular between 1:1.2 and 1:3, and even more particularly between 1:1.5 and 1:2.5; said process makes it possible to increase the ultimate tensile strength and yield strength values and to keep the elastic modulus and puncture strength at more or less constant values.

Within the scope of the present invention, cold stretching is intended as stretching performed on the unmelted biodegradable polymer material. More specifically, cold stretching is intended, with reference to films with thickness below 70 µm, as stretching performed at a temperature ranging from 10 to 50°C, preferably between 15 and 40°C and even more preferably between 20 and 30°C. For films with thickness above 70 µm, the temperatures required for cold stretching may exceed the ranges mentioned above. The process according to the present invention is preferably performed at ambient temperatures but, in relation to the thickness of the films to be subjected to stretching and the composition of the biodegradable polymer material, heating may in fact be necessary to promote the stretching process and make it homogeneous.

The cold stretching process according to the present invention can be implemented on various types of film, for example on single-sheet, single-fold films or directly on tubular films. The cold stretching process according to the present invention can in fact be implemented both discontinuously and in line with the bubble blowing process. If the process is performed in line with the bubble blowing process, this takes place beyond the chill line, that is, subsequent to the height beyond which the bubble has solidified. In this case double bubble blowing processes can also be used.

The biodegradable films obtained with the process according to the present invention are particularly suitable to be used in various fields of application, for example for shopping bags, films for sanitary products and mulching films.

The process according to the present invention is directed to films produced from biodegradable polymer materials. The biodegradable polymer materials that can be used in the process of the present invention may be of various nature, such as, for example, biodegradable aliphatic polyesters, aliphatic-aromatic polyesters, polyhydroxyalkanoates, polyhydroxyacids, polyesteramides. Particularly preferred are biodegradable polymers showing values of the Modulus (measured on blown films with 30 µm thickness) comprised in the range of 40 - 300 MPa, preferably 60 - 250 MPa and more preferably 100 - 200 MPa. In the present description biodegradability means biodegradability according to the EN 13432 standard.

Particularly suitable to be subjected to the process of the invention are films produced from compositions with at least one polysaccharide derivative and at least one biodegradable polymer, in particular a biodegradable aliphatic or aliphatic-aromatic polymer from dicarboxylic acid/diol and/or hydroxy acid. The term polysaccharide comprises in particular starch, cellulose and its derivatives (such as for example cellulose acetate, cellulose proprionate, cellulose acetate propionate, cellulose butyrate), alginates. Polysaccharides can be combined also with proteins.

Particularly preferred are films produced from a composition containing starch and at least one biodegradable aliphatic or aliphatic-aromatic polymer from dicarboxylic acid/diol and/or hydroxy acid.

Examples of diacids are succinic, oxalic, malonic, glutaric, adipic, pimelic, suberic, undecanoic, dodecanoic, azelaic, sebacic and brassylic acid. Particularly preferred are adipic acid, azelaic acid, sebacic acid and brassylic acid or their mixtures.

Specific glycols are ethylene glycol, diethylene glycol, triethylene glycol, polyethylene glycol. 1,2- and 1,3-propylene glycol, dipropylene glycol, 1,3-butandiol, 1,4-butandiol, 3-methyl-1,5-pentandiol, 1,6-hexandiol, 1,9-nonandiol, 1,10-decandiol, 1,11-undecandiol, 1,12-dodecandiol, 1,13-tridecandiol, neopentyl glycol, polytetramethylene glycol, 1,4-cyclohexandimethanol and cyclohexandiol. The compounds can be used alone or in a mixture. Typical hydroxy acids include glycolic acid, lactic acid, 3-hydroxybutyric, 4-hydroxybutyric, 3-hydroxyvaleric, 4-hydroxyvaleric, 6-hydroxycaproic, and also include cyclic esters of hydroxycarboxylic acids, such as glycolide, dimers of glycolic acid, ε-caprolactone and 6-hydroxycaproic acid.

With regard to the aromatic part, the biodegradable polymer used in the films subjected to the process according to the present invention preferably contains a polyfunctional aromatic compound such as a phthalic acid, in particular terephthalic acid, bisphenol A, hydroquinone and the like.

The biodegradable aliphatic or aliphatic-aromatic polymer can advantageously be a thermoplastic copolyester of the saturated-unsaturated type obtained from dicarboxylic acids, diols and unsaturated acids of both natural and synthetic origin.

The biodegradable aliphatic or aliphatic-aromatic polymer can be obtained with high molecular weights by adding various organic peroxides in the course of its treatment with peroxide during extrusion.

Particularly preferred are polymers with the aromatic part constituted by terephthalic acid and the aliphatic part constituted by diacid diols and/or hydroxy acids, with branched and straight aliphatic chain C₂-C₂₀ (if necessary chain extended with isocyanates, anhydrides or epoxides), and in particular polyesters based on terephthalic acid, adipidic acid or sebacic acid, or azelaic acid and butandiol.

Particularly preferred polymers are polybutylenadipate-co-terephtalate produced by BASF A.G. and marketed with the trademark Ecoflex^{®} and polybutylenadipate-co-terephtalate produced by Eastman under the tradename Eastarbio^{®}.

With reference to the starch component of films to be subjected to the process according to the present invention, the term starch is intended as native starch, preferably com, potato, tapioca, rice, wheat or pea starch and also starch with high amylose contents and "waxy" starches. Flour, grits, physically and chemically modified starches such as ethoxylated starches, oxypropylated starches, acetate starches, butyrate starches, propionate starches, cationic starches, oxidized starches, reticulated starches, gelatinized starches, destructured starches and starches complexed by polymer structures can also be used. Particularly preferred are destructured starch based films.

Advantageously, the mixture to produce the film may contain one or more plasticizers. Suitable plasticizers are for example those described in EP-0 575 349, the content of which is intended as incorporated in the present invention. Particularly suitable are glycerol, sorbitol, mannitol, erythritol, polyvinyl alcohol with low molecular weight, as well as the oxyethylated and oxypropylated derivatives of the aforesaid compounds, citrates and acetins. The starting compositions can also contain suitable additives, such as lubricating or dispersing agents, dyes, fillers, etc.

Films suitable to be subjected to the present process can be both mono-layer and multi-layer. In the case of multi-layer films, said films can be constituted by at least one layer of starch based material and by at least one layer of biodegradable polyester as is or mixed with other polyesters.

The cold stretching process according to the present invention makes it possible to produce biodegradable films with reduced thickness and with remarkable mechanical properties. These films are therefore useful to produce products such as all kinds and shapes of bags, in particular bags for separate waste collection, shopping bags, mulch film, diapers, sanitary articles. In particular, it is possible to produce stretched films with thickness in the interval ranging from 5 to 60 µm, preferably from 6 to 40 µm and even more preferably from 8 to 30 µm.

In view of the high yield strength values, the films produced according to the present process are particularly advantageous for the production of shopping bags. Films produced according to the present process can also be advantageously be used as reduced thickness backsheets in diapers, as perforated topsheets in sanitary articles and as films for primary and secondary outer packaging materials.

### EXAMPLE 1

A composition constituted by

| | |
|---|---|
| Com starch | 29.5 % |
| Polybutylenadipate-co-terephtalate (47% terephtalate; 53% adipate; MFI = 2,5 dl/g) | 64.0 % |
| Glycerol | 6.2 % |
| Erucamide | 0.3 % |

was fed, with the addition of 2.2% of water, to a blown film processing unit obtaining a film with thickness of approximately 31 µ. Said film was subsequently subjected to a stretching process at ambient temperature (23°C, 50% relative humidity) and with various stretch ratios, in particular 1:2, 1:3 and 1:4.

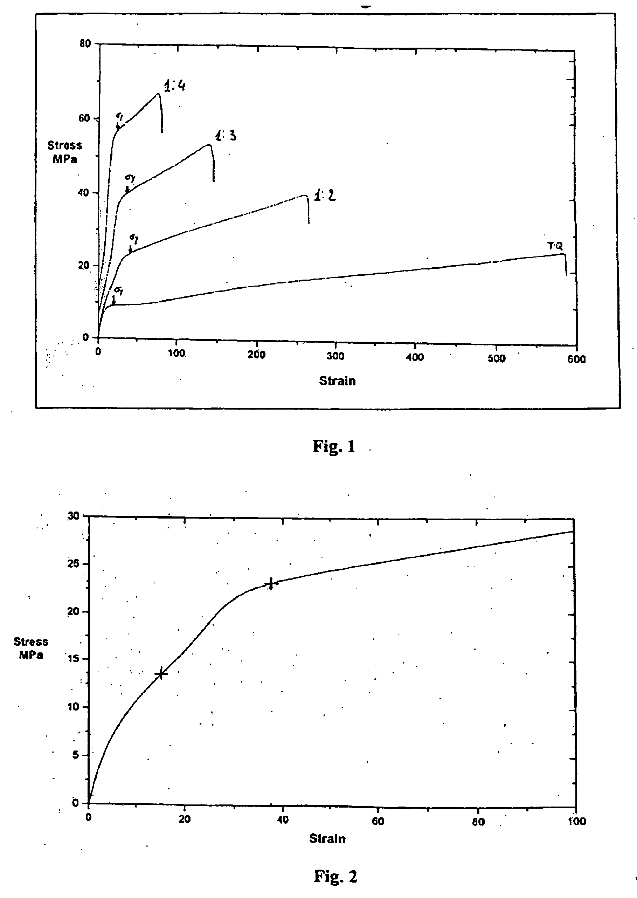

Figure 1 shows the Stress-Strain curves of said stretched films and of the film as is.

Figure 2 shows the enlarged detail of the initial part of the curve relative to the stretched film with a ratio of 1:2 which has a characteristic bimodal trend.

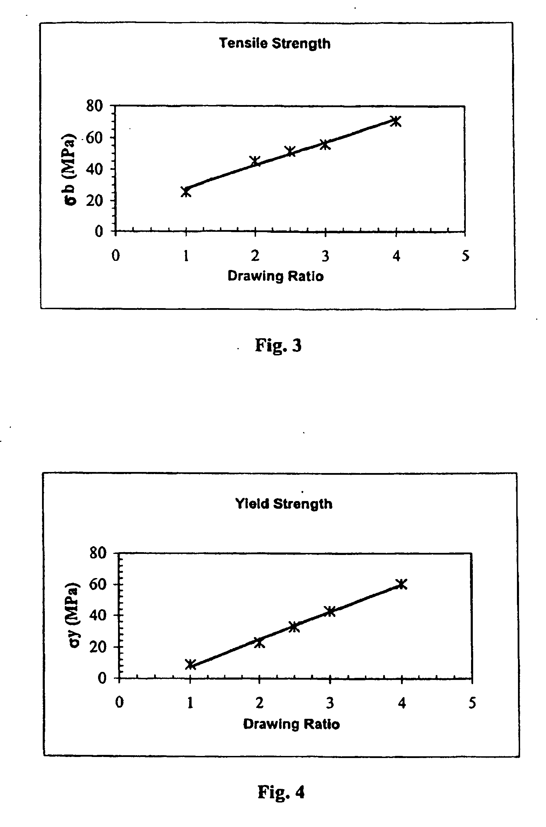

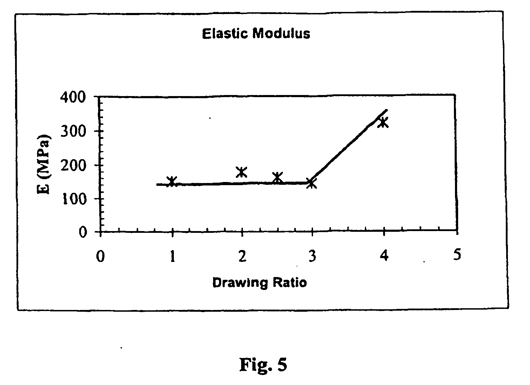

Figures 3, 4 and 5 instead show the graphs relative to the values of the ultimate tensile strength, the yield strength and modulus tests performed on said films.

Finally, Table 1 shows the values of the mechanical tests relative to the film as such, with thickness of 31 µm and 19 µm, compared to the values of the 31 µm cold stretched film stretched at different temperatures and with stretch ratio of 1:2 until reaching a thickness of 19 µm.

The tests to determine the Tensile Strength, Yield Strength and Modulus were carried out according to the standard ASTM D 882. The puncture strength test was instead carried out on a specimen with a diameter of 7.6 cm positioned on an annular support. The puncture punch with semi-circular head had a Ø = 3 mm. The film was tested at 23°C and 50% of relative humidity with the punch at a speed of 1 m/sec. The film has also been stretched at 15° and 45°C. The data provided below show that the stretching process according to the present invention makes it possible to obtain a remarkable increase in the mechanical properties with respect to the unstretched biodegradable film.

**TABLE 1**

| Film type | Tensile Strength σ_{b} (Mpa) | Yield Strength σ_{y} (Mpa) | E Modulus (Mpa) | Puncture Test En_{b} (J/mm) |
|---|---|---|---|---|
| NFOIU 31 µm | 25 | 11 | 135 | 1.81 |
| NFOIU 19 µm | 21 | 9 | 130 | 1.72 |
| NFOIU 19 µm from stretched 31 µm film (23°C) | 46 | 24 | 140 | 1.84 |
| NFOIU 19 µm from stretched 31 µm film (15°C) | 42 | 21 | 138 | 1.82 |
| NFOIU 19 µm from stretched 31 µm film (45°C) | 49 | 26 | 143 | 1.85 |

## Claims

1. Process to produce improved biodegradable plastic films, comprising producing a biodegradable plastic film with thickness below 70 µm by bubble blowing and then subjecting said film to monoaxial or biaxial stretching with a stretch ratio greater than 1:1 and less than 1:4, **characterized in that** said stretching is performed at a temperature ranging from 10 to 50°C.

2. Process according to claim 1, **characterized by** a stretching ratio from 1:1.5 to 1:3.

3. Process according to claim 1, **characterized by** a stretching ratio from 1:1.5 to 1:2.5.

4. Process according to claim 1, **characterized in that** the stretching of said biodegradable plastic films with thickness below 70 µm is performed at temperatures between 15 and 40°C.

5. Process according to claim 1, **characterized in that** the stretching of said biodegradable plastic films with thickness below 70 µm is performed at temperatures between 20 and 30°C.

6. Process according to the previous claim wherein stretching is performed at ambient temperature.

7. Process according to claim 1, **characterized in that** the biodegradable film is produced from one or more biodegradable polymer material selected from the group consisting of biodegradable aliphatic polyesters, biodegradable aliphatic-aromatic polyesters, biodegradable polyhydraxyalkanaates, biodegradable polyhydroxyacids and biodegradable polyesteramides.

8. Process according to claim 1, **characterized in that** the biodegradable film is produced from compositions comprising at least one polysaccharide derivative and at least one biodegradable polymer.

9. Process according to claim 8, **characterized in that** said biodegradable polymer is an aliphatic or aliphatic-aromatic polyester derived from dicarboxylic acid/diol and/or hydroxy acid.

10. Process according to claim 9, **characterized in that** said film is produced from a composition comprising starch and at least one biodegradable aliphatic or aliphatic-aromatic polyester from dicarboxylic acid/diol and/or hydroxy acid.

11. Process according to claim 10, **characterized in that** the aromatic part of the biodegradable polyester comprises terephthalic acid and the aliphatic part comprises a diol/diacid.

12. Process according to claim 11, **characterized in that** said aliphatic part comprises adipidic acid or sebacic acid or azelaic acid and butandiol.

13. Process according to any of the preceding claims, wherein the film subjected to stretching is a single-sheet or a single-fold or a tubular film.

14. Process according to claim 10, wherein said film is a multi-layer film comprising at least one starch based layer and at least one layer of biodegradable polyester as is or mixed with other polyesters.

15. Process according to claim 1, wherein the cold stretching process of the biodegradable film is implemented discontinuously or in line with the bubble blowing process of said film.

16. Process according to the preceding claim, wherein the stretching process in line with the bubble blowing process takes place beyond the chill line.

17. Stretched films with thickness ranging from 5 to 60 µm, produced from one or more biodegradable polymer material selected from biodegradable aliphatic polyesters, aliphatic-aromatic polyesters, polyesteramides, showing values of Modulus comprised between 40 - 300 MPa, said stretched films being produced according to the cold stretching process described in any one of the previous claims.

18. Stretched films according to claim 17, with thickness ranging from 6 to 40 µm.

19. Stretched films according to claim 17, with thickness ranging from 8 to 30 µm.

20. Bags, in particular bags for separate waste collection, shopping bags, mulch film, diapers, sanitary articles, films for primary and secondary outer packaging materials produced from cold stretched biodegradable films produced from one or more biodegradable polymer material selected from biodegradable aliphatic polyesters, aliphatic-aromatic polyesters, polyesteramides, showing values of Modulus comprised between 40-300 MPa, said cold stretched biodegradable films being produced according to the process described in any one of the preceding claims.

21. Stretched films according to Claim 17, wherein said biodegradable polymer material is in compositions with at least one polysaccharide derivative.

22. Bags according to claim 20, wherein said biodegradable polymer material is in compositions with at least one polysaccharide derivative.

## Patentansprüche

1. Verfahren zur Herstellung verbesserter, bioabbaubarer Kunststoffolien, das die Herstellung einer bioabbaubaren Kunststoffolie mit einer Dicke unter 70 µm durch Aufblasen einer Blase und dann Unterwerfen der Folie einer monoaxialen oder biaxialen Verstreckung mit einem Verstreckungsverhältnis von grösser als 1:1 und weniger als 1:4 umfasst, **dadurch gekennzeichnet, dass** die Verstreckung bei einer Temperatur im Bereich von 10 bis 50°C durchgeführt wird.

2. Verfahren gemäss Anspruch 1, **gekennzeichnet durch** ein Verstreckungsverhältnis von 1:1,5 bis 1:3.

3. Verfahren gemäss Anspruch 1, **gekennzeichnet durch** ein Verstreckungsverhältnis von 1:1,5 bis 1:2,5.

4. Verfahren gemäss Anspruch 1, **dadurch gekennzeichnet, dass** das Verstrecken der bioabbaubaren Kunststoffolien mit einer Dicke unterhalb 70 µm bei einer Temperatur zwischen 15 und 40°C durchgeführt wird.

5. Verfahren gemäss Anspruch 1, **dadurch gekennzeichnet, dass** das Verstrecken der bioabbaubaren Kunststoffolien mit einer Dicke unterhalb 70 µm bei einer Temperatur zwischen 20 und 30°C durchgeführt wird.

6. Verfahren gemäss dem vorstehenden Anspruch, worin das Verstrecken bei Raumtemperatur durchgeführt wird.

7. Verfahren gemäss Anspruch 1, **dadurch gekennzeichnet, dass** die bioabbaubare Folie aus einem oder mehreren bioabbaubaren Polymermaterial(ien) hergestellt wird, das/die aus der Gruppe bestehend aus bioabbaubaren aliphatischen Polyestern, bioabbaubaren aliphatisch-aromatischen Polyestern, bioabbaubaren Polyhydroxyalkanoaten, bioabbaubaren Polyhydroxysäuren und bioabbaubaren Polyesteramiden ausgewählt ist/sind.

8. Verfahren gemäss Anspruch 1, **dadurch gekennzeichnet, dass** die bioabbaubare Folie aus Zusammensetzungen hergestellt wird, die mindestens ein Polysaccharidderivat und mindestens ein bioabbaubares Polymer umfassen.

9. Verfahren gemäss Anspruch 8, **dadurch gekennzeichnet, dass** das bioabbaubare Polymer ein aliphatischer oder aliphatisch-aromatischer Polyester ist, der aus Dicarbonsäure/Diol und/oder Hydroxysäure abgeleitet ist.

10. Verfahren gemäss Anspruch 9, **dadurch gekennzeichnet, dass** die Folie aus einer Zusammensetzung hergestellt wird, die Stärke und mindestens einen bioabbaubaren aliphatischen oder aliphatisch-aromatischen Polyester aus Dicarbonsäure/Diol und/oder Hydroxysäure umfasst.

11. Verfahren gemäss Anspruch 10, **dadurch gekennzeichnet, dass** der aromatische Teil des bioabbaubaren Polyesters Terephthalsäure umfasst und der aliphatische Teil Diol/Disäure umfasst.

12. Verfahren gemäss Anspruch 11, **dadurch gekennzeichnet, dass** der aliphatische Teil Adipinsäure oder Sebacinsäure oder Azelainsäure und Butandiol umfasst.

13. Verfahren gemäss irgendeinem der vorhergehenden Ansprüche, worin die Folie, die einer Verstreckung unterzogen wird, eine Einzelbogen- oder eine Einzelfalten- oder eine röhrenförmige Folie ist.

14. Verfahren gemäss Anspruch 10, worin die Folie eine mehrschichtige Folie ist, die mindestens eine Schicht auf Stärkebasis und mindestens eine Schicht aus bioabbaubarem Polyester, so wie er ist oder gemischt mit anderen Polyestern, umfasst.

15. Verfahren gemäss Anspruch 1, worin das Kaltstreckverfahren der bioabbaubaren Folie diskontinuierlich oder in Reihe mit dem Blasen-Aufblasverfahren der Folie implementiert ist.

16. Verfahren gemäss dem vorhergehenden Anspruch, worin das Verstreckungsverfahren in Reihe mit dem Blasen-Aufblasverfahren jenseits der Abkühlstrecke stattfindet.

17. Verstreckte Folie mit einer Dicke im Bereich von 5 bis 60 µm, die aus einem oder mehreren bioabbaubaren Polymermaterial(ien), ausgewählt aus bioabbaubaren aliphatischen Polyestern, aliphatisch-aromatischen Polyestern und Polyesteramiden, hergestellt sind, Modulwerte zeigen, die zwischen 40 und 300 MPa liegen, wobei die verstreckten Folien gemäss dem in irgendeinem der vorhergehenden Ansprüche beschriebenen Kaltstreckverfahren hergestellt sind.

18. Verstreckte Folien gemäss Anspruch 17, worin die Dicke im Bereich von 6 bis 40 µm liegt.

19. Verstreckte Folien gemäss Anspruch 17, worin die Dicke im Bereich von 8 bis 30 µm liegt.

20. Tüten, insbesondere Tüten für die Mülltrennung, Einkaufstüten, Mulchfolien, Windeln, Hygieneartikel, Folien für primäre und sekundäre äussere Verpackungsmaterialien, die aus kaltverstreckten bioabbaubaren Folien, hergestellt aus einem oder mehreren bioabbaubaren Polymermaterial(ien), ausgewählt aus bioabbaubaren aliphatischen Polyestern, aliphatisch-aromatischen Polyestern und Polyesteramiden, hergestellt sind, die Modulwerte zeigen, die zwischen 40 und 300 MPa liegen, wobei die kaltverstreckten bioabbaubaren Folien gemäss dem in irgendeinem der vorhergehenden Ansprüche beschriebenen Verfahren hergestellt sind.

21. Verstreckte Folien gemäss Anspruch 17, wobei das bioabbaubare Polymermaterial in Zusammensetzungen mit mindestens einem Polysaccharidderivat vorliegt.

22. Tüten gemäss Anspruch 20, wobei das bioabbaubare Polymermaterial in Zusammensetzungen mit mindestens einem Polysaccharidderivat vorliegt.

## Revendications

1. Procédé de production de films plastiques biodégradables améliorés, comprenant la production d'un film plastique biodégradable ayant une épaisseur inférieure à 70 µm par soufflage de bulle puis l'exposition dudit film à un étirage monoaxial ou biaxial présentant un rapport d'étirage supérieur à 1/1 et inférieur à 1/4, **caractérisé en ce que** ledit étirage est réalisé à une température allant de 10 à 50 °C.

2. Procédé selon la revendication 1, **caractérisé par** un rapport d'étirage de 1/1,5 à 1/3.

3. Procédé selon la revendication 1, **caractérisé par** un rapport d'étirage de 1/1,5 à 1/2,5.

4. Procédé selon la revendication 1, **caractérisé en ce que** l'étirage desdits films plastiques biodégradables ayant une épaisseur inférieure à 70 µm est réalisé à des températures comprises entre 15 et 40 °C.

5. Procédé selon la revendication 1, **caractérisé en ce que** l'étirage desdits films plastiques biodégradables ayant une épaisseur inférieure à 70 µm est réalisé à des températures comprises entre 20 et 30 °C.

6. Procédé selon la revendication précédente, dans lequel l'étirage est réalisé à température ambiante.

7. Procédé selon la revendication 1, **caractérisé en ce que** le film biodégradable est produit à partir d'un ou de plusieurs matériaux polymères biodégradables choisis dans le groupe constitué des polyesters aliphatiques biodégradables, des polyesters aliphatiques-aromatiques biodégradables, des polyhydroxyalcanoates biodégradables, des polyhydroxyacides biodégradables et des polyesteramides biodégradables.

8. Procédé selon la revendication 1, **caractérisé en ce que** le film biodégradable est produit à partir de compositions comprenant au moins un dérivé polysaccharide et au moins un polymère biodégradable.

9. Procédé selon la revendication 8, **caractérisé en ce que** ledit polymère biodégradable est un polyester aliphatique ou aliphatique-aromatique dérivé d'acide dicarboxylique/diol et/ou d'hydroxyacide.

10. Procédé selon la revendication 9, **caractérisé en ce que** ledit film est produit à partir d'une composition comprenant de l'amidon et au moins un polyester aliphatique ou aliphatique-aromatique biodégradable dérivé d'acide dicarboxylique/diol et/ou d'hydroxyacide.

11. Procédé selon la revendication 10, **caractérisé en ce que** la partie aromatique du polyester biodégradable comprend de l'acide téréphtalique et la partie aliphatique comprend un diol/diacide.

12. Procédé selon la revendication 11, **caractérisé en ce que** ladite partie aliphatique comprend de l'acide adipique ou de l'acide sébacique ou de l'acide azélaïque et du butanediol.

13. Procédé selon l'une quelconque des revendications précédentes, dans lequel le film soumis à un étirage est une feuille simple ou un pli simple ou un film tubulaire.

14. Procédé selon la revendication 10, dans lequel ledit film est un film multicouche comprenant au moins une couche à base d'amidon et au moins une couche de polyester biodégradable tel quel ou mélangé à d'autres polyesters.

15. Procédé selon la revendication 1, dans lequel le procédé d'étirage à froid du film biodégradable est effectué de manière discontinue ou en ligne avec le procédé de soufflage de bulle dudit film.

16. Procédé selon la revendication précédente, dans lequel le procédé d'étirage en ligne avec le procédé de soufflage de bulle a lieu au-delà de la ligne de refroidissement brusque.

17. Films étirés ayant une épaisseur allant de 5 à 60 µm, produits à partir d'un ou de plusieurs matériaux polymères biodégradables choisis parmi les polyesters aliphatiques biodégradables, les polyesters aliphatiques-aromatiques, les polyesteramides, présentant des valeurs de module comprises entre 40 et 300 MPa, lesdits films étirés étant produits conformément au procédé d'étirage à froid décrit dans l'une quelconque des revendications précédentes.

18. Films étirés selon la revendication 17, ayant une épaisseur allant de 6 à 40 µm.

19. Films étirés selon la revendication 17, ayant une épaisseur allant de 8 à 30 µm.

20. Sacs, en particulier sacs destinés au tri sélectif, cabas, film plastique, couches, articles sanitaires, films pour matériaux d'emballage externes, primaires et secondaires, produits à partir de films biodégradables étirés à froid, produits à partir d'un ou de plusieurs matériaux polymères biodégradables choisis parmi les polyesters aliphatiques biodégradables, les polyesters aliphatiques-aromatiques, les polyesteramides, présentant des valeurs de module comprises entre 40 et 300 MPa, lesdits films biodégradables étirés à froid étant produits conformément au procédé décrit dans l'une quelconque des revendications précédentes.

21. Films étirés selon la revendication 17, dans lesquels ledit matériau polymère biodégradable est inclus dans les compositions avec au moins un dérivé polysaccharide.

22. Sacs selon la revendication 20, dans lesquels ledit matériau polymère biodégradable est inclus dans les compositions avec au moins un dérivé polysaccharide.
